# EUROPEAN PATENT APPLICATION

(11) **EP 4 394 677 A1**
(43) Date of publication of application: **03.07.2024**
(21) Application number: 23220486.7
(22) Date of filing: 28.12.2023
(51) Int. Cl.: G06Q 10/0833, G06K 7/10, H04B 17/318, H04W 4/029, H04W 4/35

(54) **DETECTING EQUIPMENT STATE VIA TAG-READER MODULATIONS**

(30) Priority: 30.12.2022 US 202263436261 P
(71) Applicant: United Parcel Service Of America, Inc., Atlanta, GA 30328 (US)
(72) Inventor: WALL, Patrick, Atlanta, GA (US); RADAKER, Jeffrey, Atlanta, GA (US); BELL, Julian, Atlanta, GA (US)
(74) Representative: Zacco Sweden AB

(57) **Abstract**

Particular embodiments described herein are directed to generating a score indicative of a predicted state that a machine or apparatus is in based on associated tag-reader modulations, such as a presence of a tag read, an absence of a tag read, a combination of the two, and/or signal strength characteristics, such as RSSI.

## Description

### BACKGROUND

In recent years, the proliferation of various sensor technologies has allowed for robust insights and inferences to be made across many enterprises and industries. For example, camera sensors, laser/photo eye sensors, radar, and lidar can be used to detect whether particular objects are present in a real world environment for autonomous driving. In another example, accelerometers and gyroscopes can be used to detect precise positioning of objects, such as aircraft, phones, wearables, and the like. However, these and other sensor technologies are not only expensive to implement, they require tedious configuration, installation, testing, and/or programming. For example, in order for a camera sensor to detect an object in the real world, a model (e.g., a Convolutional Neural Network (CNN)) has to be trained on thousands of human-labeled images, where millions of parameters (e.g., weights, coefficients) and hyperparameters (e.g., choice of loss function and number of hidden layers) must be implemented to initiate or complete training. Consequently, deployment time is extensively delayed and accuracy is reduced due to potential model overfitting, underfitting, and the like.
Tag-reader-based technologies, such as a Radio Frequency Identification (RFID), however, do not require tedious configuration, installation, testing, and programming. RFID is a way to store and retrieve data through electromagnetic transmission to a Radio Frequency (RF) compatible integrated circuit. An RFID reader device reads data emitted from or located within RFID tags. RFID readers and tags use a defined radio frequency and protocol to transmit and receive data. However, RFID and other tag-reader technologies are currently static in functionality. For example, conventional RFID technologies can only detect the presence of some item or perform quick and dirty trilateration of an item. For instance, existing RFID technologies can detect the presence of a package based on the RFID tag attached to the package transmitting data to a RFID reader. The RFID reader then decodes the data and then maps the decoded data to the particular package.

### BRIEF DESCRIPTION OF THE DRAWINGS

Having thus described the disclosure in general terms, reference will now be made to the accompanying drawings, which are not necessarily drawn to scale, and wherein:
FIG. 1 is a schematic diagram of an example system architecture in which aspects of the present disclosure are employed, according to some embodiments;
FIG. 2 is a schematic diagram of an example conveyor belt assembly 216, according to some embodiments;
FIG. 3 is a table illustrating a mapping of received tag data to predefined tag characteristics, according to some embodiments;
FIG. 4 is a flow diagram of an example process for generating a score indicative of a predicted state that a machine or apparatus is in, according to some embodiments;
FIG. 5 is a schematic diagram of a computing environment in which aspects of the present disclosure are employed, according to some embodiments;
FIG. 6 is a schematic diagram of an analysis computing entity in which aspects of the present disclosure are employed, according to some embodiments; and
FIG. 7 is a schematic diagram of a sour computing entity in which aspects of the present disclosure are employed, according to some embodiments.

### DETAILED DESCRIPTION OF THE INVENTION

The present disclosure will now be described more fully hereinafter with reference to the accompanying drawings, in which some, but not all embodiments of the disclosure are shown. Indeed, the disclosure may be embodied in many different forms and should not be construed as limited to the embodiments set forth herein. Rather, these embodiments are provided so that this disclosure will satisfy applicable legal requirements. Like numbers refer to like elements throughout.

### I. Overview

Various embodiments of the present disclosure provide one or more technical solutions to one or more of the technical problems described above with respect to conventional sensor technologies and tag-reader based technologies. Particular embodiments described herein are directed to generating a score indicative of a predicted state that a machine or apparatus (e.g., a conveyor belt assembly) is in based on associated tag-reader modulations (e.g., a presence of a tag read, an absence of a tag read, a combination of the two, and/or signal strength characteristics, such as RSSI). For example, particular embodiments can generate a confidence level score that a bulkhead door of a logistics vehicle is open based on running tag data through conditional programming statements. Such statements may indicate that if there is a presence of a RFID read (the RFID reader has read data that has been transmitted from a tag), this indicates that the door is closed and if there is an absence of the RFID read, this indicates that the door is open. Accordingly, for example, if a reader is reading data from the tag, it can be inferred that the bulkhead door is closed.

In operation, some embodiments first receive a presence indication that a reader device has read first data transmitted from a first tag (i.e., detecting the presence of a given tag or tag read) and/or an absence indication that the reader device has not read the first data (i.e., detecting the absence of a given tag or tag read) (e.g., because an antenna of the reader device has transmitted an interrogation signal without the first tag having responsively transmitted the first data back to the antenna). RFID readers, for example, typically transmit interrogation signals blindly with no specific tag as a target. If a given RFID tag is able to receive that interrogation signal - because it is in range of the interrogation signal (distance), and not blocked by any absorbing or reflecting material ("visible/non-visible") - then it will respond to that interrogation signal with a response that is captured by the RFID reader, which means that the presence indication will be received because the reader device will be able to read the tag data contained in the response. However, if the RFID tag is not in range of the interrogation signal and/or blocked by an absorbing or reflecting material, embodiments receive the absence indication because the RFID tag will not respond to that interrogation signal and therefore the reader device will not be able to receive and read the data contained in a response signal. The RFID reader typically has no idea what tags are nearby or visible until it listens for responses.

In response to receiving such presence indication or absence indication, some embodiments associate the first tag with a classification. For example, some embodiments map, via a data structure, or otherwise associate received data of the first tag to a tag class, such as bulkhead door tag. And based at least in part on the classification of the first tag, some embodiments then associate the classification to one or more predefined read characteristics associated with the first tag and class.

The one or more predefined read characteristics correspond to expected behavior for a machine or apparatus. For example, the predefined read characteristics may be criteria or rules for different tag-reader modulations of a given tag class. Various tags in an environment may be coupled to a particular machine or apparatus. Such machine or apparatus may have one or more expected behaviors. For example, a conveyor belt is expected to drive at varying speeds and parcels on the top of the conveyor belts are expected to move along the conveyor belts at the same speed. In another example, a vertical sliding door is expected to slide up or down to open or shut. There may be predefined tag-reader characteristics that define specific modulations that correspond to the specific expected behavior. For example, if a reader device reads a specific tag coupled to a conveyor belt at a particular time interval, it can be inferred that the conveyor belt is rotating at X speed based on the particular time interval.

Some embodiments then compare the one or more predefined read characteristics with at least one of: the first indication, a signal strength level associated with first data, or the second indication. And based at least in part on the comparing, some embodiments then generate a score indicative of a predicted state that the machine or apparatus is in. For example, based on the first data being transmitted at a first RSSI level, compared to a rule that states that any data transmitted or received within a signal strength range (that includes the first RSSI level), this indicates that an unmanned aerial vehicle (UAV) has landed on a railing or landing pad. Accordingly, particular embodiments generate a high confidence level score (.90) that the UAV vehicle has landed on a railing because of the high RSSI level between the classified tag and the reader.

Some embodiments improve existing sensor-based technologies because they use tag-reader components and functionality. For example, particular embodiments improve camera sensors, laser/photo eye sensors, radar, lidar, accelerometers, gyroscopes, and many more sensors because tag-reader technologies are not as costly, do not require tedious configuration, installation, testing, and/or programming. Tags transmit identifying data (e.g., tag IDs or unique identifiers) and readers read the transmitted data by decoding the data. Such simple functionality and components only require minimal configuration or installation to ensure that a tag is emitting data and the reader can read the tag. But no extensive testing, programming, or model training is needed. Tags are typically cheap in cost, and both tags and readers are easy to install on any suitable surface. For example, a tag that has a size of 2x4 inches may include an adhesive flat surface that can be placed on any corresponding flat surface without the need for wires or other bulky equipment installation. Moreover, readers may already be implemented in environments to address material tracking challenges, making implementation of these techniques extremely low cost. Accordingly, one technical solution is the use of a reader device and tag, such as a RFID reader and tag combination, as well as receiving an indication that a reader device has read data transmitted from a tag.

Some embodiments improve existing tag-reader technologies, such as RFID, because they can perform more robust and useful functionality relative to these existing tag-reader technologies. For example, instead of only being able to detect the presence of a package because a tag attached to the package is within a communication range of an antenna of a reader device, particular embodiments are additionally or alternatively able generate a score indicative of a predicted state that a machine or apparatus is in. Specifically, each of the following steps are technical solutions because of the added functionality: the classification of tags or association of tags to a classification, an association of the classification with one or more predefined read characteristics, comparing the one or more predefined read characteristics with tag data, and/or generating a score indicative of a predicted state that machine or apparatus is in. Some or each of these steps is a technical solution to these technical problems since existing tag-reader technologies do not currently perform these steps. Each of these steps help make useful inferences that would otherwise require costly installation, configuration, testing, and the like, as described above with respect to existing sensor technologies.

### II. Exemplary System Architecture

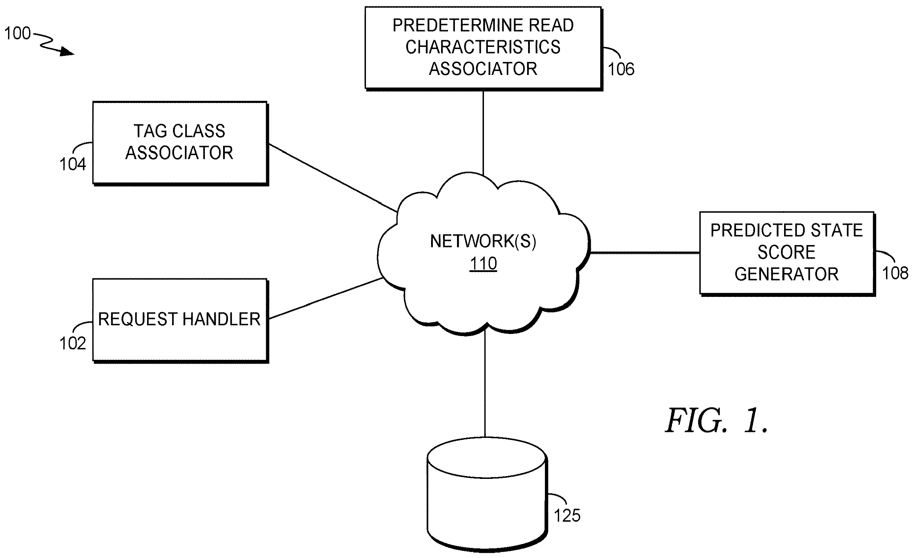

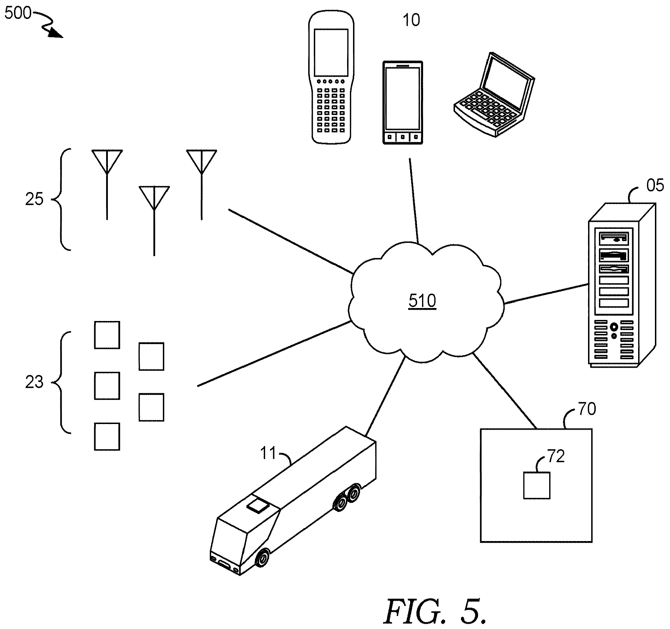

FIG. 1 is a block diagram of an illustrative system architecture 100 in which some embodiments of the present technology are employed. Although the system 100 is illustrated as including specific component types associated with a particular quantity, it is understood that alternatively or additionally other component types may exist at any particular quantity. In some embodiments, one or more components may also be combined. It is also understood that each component or module can be located on the same or different host computing devices. For example, in some embodiments, some or each of the components within the system 100 are distributed across a cloud computing system (e.g., various analysis computing entities 05 of FIG. 5). In other embodiments, the system 100 is located at a single host or computing device (e.g., a single analysis computing entity 05 or a mobile computing entity 10, as shown in FIG. 5). In some embodiments, the system 100 illustrates executable program code such that all of the illustrated components and data structures are linked in preparation to be executed at run-time.

System 100 is not intended to be limiting and represents only one example of a suitable computing system architecture. Other arrangements and elements can be used in addition to or instead of those shown, and some elements may be omitted altogether for the sake of clarity. Further, many of the elements described herein are functional entities that may be implemented as discrete or distributed components or in conjunction with other components, and in any suitable combination and location. For instance, the functionality of system 100 may be provided via a software as a service (SaaS) model, e.g., a cloud and/or web-based service. In other embodiments, the functionalities of system 100 may be implemented via a client/server architecture.

The system 100 is generally responsible for generating a score indicative of a predicted state that a machine or apparatus is in. The system 100 includes a request handler 102, a tag class associator 104, a predetermined read characteristics associator 106, a predicted state score generator 108, and storage 125, each of which is communicatively coupled via the network(s) 110. The network(s) 110 can be any suitable network, such as a Local Area Network (LAN), a Wide Area Network (WAN), the internet, or a combination of these, and/or include wired, wireless, or fiber optic connections. In general, network(s) 110 can represent any combination of connections (e.g., APIs or linkers) or protocols that will support communications between the components of the system 100.

The request handler 102 is generally responsible for receiving a request to determine a state (e.g., status-e.g., "on," "off," "open," or "closed"-speed, whether components are connected, and the like) and programmatically calling other functions or components of the system 100 to trigger the execution of the request. For example, a user, such as a manager working in a logistics hub may input, at a mobile device, a request to receive information regarding the state of all units (or a particular unit) of equipment within the hub. In response to such input, the mobile device transmits, over the network 110, a request to a server (e.g., the analysis computing entity 05 of FIG. 5) to generate a score indicative of a predicted state that the equipment is in. For example, the request handler 102 can take, as input, an ID received in the request, which corresponds to an ID of the equipment for which a state is being requested to be retrieved. The request handler 102 can then read a data structure, such as a lookup table, to map the received ID with batched or near real-time readings of the tag(s) associated with the corresponding machine or apparatus. For instance, the request handler 102 may use a lookup table to map the received ID to all the data records that indicate all the tag-reader modulations over a X time period or interval (e.g., all tag readings during the last 5 minutes) for each tag associated or mapped to (included on) a particular machine or apparatus that matches the received ID. In some embodiments, the request handler 102 then programmatically calls the tag class associator 104, the predetermined read characteristics associator 106, and/or the predicted state score generator 108, as described in more detail below.

The tag class associator 104 is generally responsible for taking, as input, at least some of the information produced by the request handler 102 in order to associate one or more tags with one or more classes. For example, using the illustration above, for each tag mapped to a particular machine or apparatus that matches the received ID (via the request handler 102), the tag class associator 104 maps the tag ID to a tag class, such as a door tag, via a lookup table data structure. For example, if a user requested to receive status information regarding a conveyor belt, the request handler 102 would map, via a data structure, the ID of the conveyor belt to IDs of all tags that are attached to the conveyor belt. Responsively, the tag class associator 104 can then also map, via the same or another helper data structure, the each tag to its corresponding tag class, such as a conveyor belt tag ID, which indicates that the tag is attached to the corresponding conveyor belt.

The predetermined read characteristics associator 106 is generally responsible for taking as input, the class determined by the tag class associator 104, in order to determine the predetermined read characteristics associated with the given class. For example, the predetermined read characteristics associator 106 can take, as input, each tag class ID determined by the tag class associator 104, and then map, via a data structure or conditional statements, each class ID to the predetermined read characteristics associated with that class. In some embodiments, a "predetermined read characteristic" is a particular predefined (e.g., at program build-time) rule, condition, policy, or machine-learned patterns that define the presence of tag reads, absence of tag reads, quantity of tag reads over a certain time interval, a combination of tag reads and/or absence of tag reads, and/or a signal strength level that a reader device should be (or is capable of) experiencing when communicating with the corresponding tag of the certain class. Such predetermined read characteristics are often different between readers and tags of different classes because the expected behavior is different for any given corresponding machine or apparatus.

The predicted state score generator 108 is generally responsible for taking as input, the tag-reader data (e.g., near real-time reads) retrieved by the request handler 102 and the predetermined read characteristics produced by the predetermined read characteristics associator 106 in order to generate a score indicative of a predicted state that a corresponding machine or apparatus is in. An "apparatus" as described herein is any component, article of manufacture, system, or any other suitable tangible item. For example, the predicted state score generator 108 in some embodiments compares the one or more predefined read characteristics with at least one of: a first indication that a reader device has read first data transmitted from a first tag, a second indication that the reader device has not read the first data, and a signal strength level associated with the first data (all of which may be queried or produced by the request handler 102). In an illustrative example, a presence of a read = TRUE received for a particular tag may be run through a conditional statement that states if a presence of read = TRUE, then door is closed. Responsively, the predicted state score generator 108 then produces a score, such as a confidence level, a distance determination, or other real number indicating that the door is closed-i.e., the state that the door is in.

The system 100 also includes storage 125. In some embodiments, the storage 125 represents any storage device, such as RAM, cache, flash, disk, etc. In some embodiments, the storage 125 represents any storage system, such as RAID or a Storage Area Network (SAN). In some embodiments, the storage 125 represents alternative or additionally data stores, such as a relational database, a graph database, and the like. In some embodiments, any of the data structures and logic described herein, such as conditional statements, is stored to the storage 125.

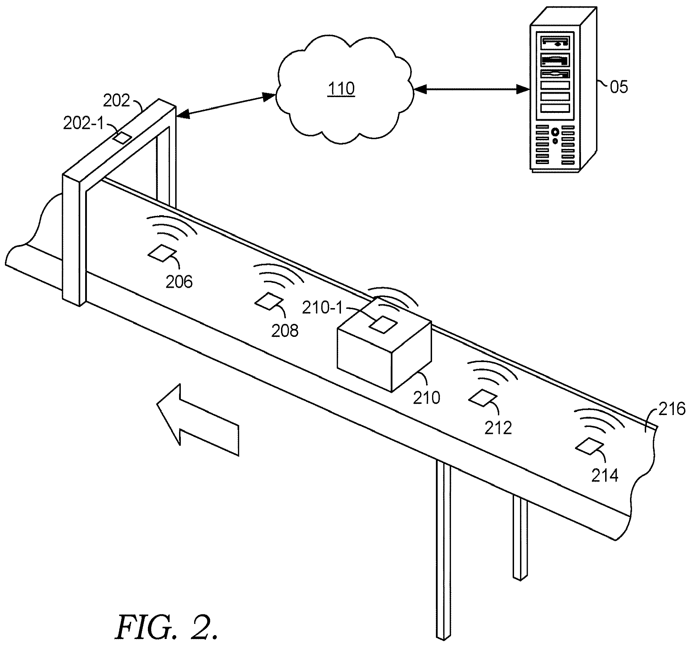

FIG. 2 is a schematic diagram of an example conveyor belt assembly 216, according to some embodiments. The conveyor belt assembly 216 includes a reader device 202-1 (which is embedded in a base frame 202 that supports the reader device 202-1) and various reference tags 206, 208, 210, 212, and 214. The reference tags are illustrated as being evenly spaced out along the conveyor belt surface of the conveyor belt assembly 216. An asset 210-with a coupled tag 210-1-is on the conveyor belt surface of the conveyor belt. Although FIG. 2 illustrates this specific configurations, there may be alternative configurations. For example, in some embodiments the conveyor belt assembly 216 only consists of a single tag, underneath or on the bottom of the conveyor belt assembly 216. Such bottom may include one or more perforations in the belt portion located such that when the perforation(s) pass over the tag, the tag is visible to the reader (i.e., tag data will be passed from the tag to the reader). This requires that the belt block RFID signals - e.g. has embedded steel banding - when the reader tries to read the tag while the tag is covered by the belt portion that does not have the perforations.

FIG. 2 illustrates that conveyor belt speed can be inferred based on a time at which the reader device 202 reads the reference tags 206, 208, 212, and 214 (or time that the associated antenna receives the data from the tag or the time that some signal characteristic - such as RSSI - reaches a specific value, a maxima, minima, etc.). For example, at a first time, based on an antenna of the reader device 202 being within a communication range threshold of (e.g., under) the tag 206, the tag 206 transmits an ID to the reader device 202, which then transmits, over the computer network(s) 110, the ID to the analysis computing entity 05, which then populates a queue data structure, as well as other metadata, such as a timestamp indicating a time at which the tag ID was received. In some embodiments, the analysis computing entity 05 includes some or each of the components of the system 100 of FIG. 1. The same process is repeated for each reference tag based on the conveyor belt rotating, which causes the attached reference tags to linearly move toward or under the reader device 202. For example, at a second time subsequent to the first time (where the tag 206 is already downstream past the reader device 202), based on an antenna of the reader device 202 being within a communication range threshold of the tag 208, the tag 208 transmits an ID to the reader device 202, which then transmits, over the computer network(s) 110, the ID to the analysis computing entity 05, which then populates the same queue data structure, as well as other metadata, such as another timestamp indicating a time at which the tag ID was received. In this way, for example, the predicted state score generator 108 can take, as input, the tag IDs received, as well as the corresponding time stamps to compare against the predetermined read characteristics. For example, a conditional statement may state that if the difference in timestamps between any two given entries in a given queue data structure is X, then the speed if the conveyor belt is Y, if the difference in timestamps is A, then the speed is B, else the speed is C if the timestamp difference is below D threshold. Accordingly, based on the actual differences in timestamps, the speed of the conveyor belt of the conveyor belt assembly 216 can be inferred.

Such conveyor belt assembly speed can be useful for many reasons. For example, if the reader device 202 is reading the tag 206 continuously over some time threshold (e.g., 3 seconds), or if the reader device 202 detects a signal parameter remaining within a given range for a given amount of time, the predetermined read characteristics may state that this indicates that there is stoppage of the belt. Responsively, some embodiments then cause a control signal of notification to be sent. For example, responsively, some embodiments causes a notification to be sent to a user device, with a message that conveyor belt assembly 216 has stopped and to investigate. The conveyor belt assembly 216 can be identified as the conveyor belt assembly needing to be inspected based on mapping the received tag IDs, via a data structure, to an ID of the conveyor belt apparatus it belongs to. In another example, if the speed of the threshold is below (or above) some speed threshold, some embodiments send a control signal to the conveyor belt assembly 216, which causes the conveyor belt to speed up or slow down to some predefined speed.

FIG. 2 also illustrates how different asset states can be inferred based on correlating the reference tags with the tag 210-1 coupled to the asset 210. For example, at a first time the tag 210-1 can be triangulated to be in a position, based on similar signal strength and phase angle within a threshold, relative to the tags 208 and/or tag 212. However, at a second time, the signal strength may be constant, and/or the phase angle may change relative to the asset tag 210-1. Moreover, the tags 208 and 212 may have been read, via a reader device, at a constant sequential time sequence but without a reading of the tag 210-1. This may indicate that the parcel 210 has fallen off, moved, or has been stuck somewhere on the conveyor belt assembly 216. Some embodiments cause transmission of the notification or control signal, as described herein.

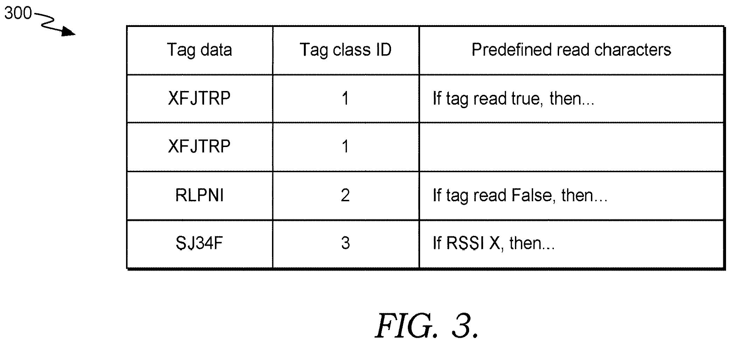

FIG. 3 is a table illustrating a mapping of received tag data to predefined tag characteristics, according to some embodiments. In some embodiments, the table 300 represents one or more data structures used by the tag class associator 104 and/or the predetermined read characteristics associator 106 of FIG. 1 in order to map a tag ID or other tag data to a tag class and corresponding predetermined read characteristics. For example, referring back to FIG. 2, in response to the reader device 202 reading data from the tag 206, the reader device 202 may then transmit, over the network(s) 110, the tag data to a device, which then uses the request handler 102 to place the tag reading in a queue. Responsively, the tag class associator 104 uses the tag data as a key to search for the corresponding data within the table 300. For example, the tag data transmitted by the reader device 202 may be "XFJTRP," which is matched to the first entry or record within the table 300. Accordingly, the tag class associator 104 then maps the tag data to the tag class ID (i.e., 1), based on reading the field immediately to the right of the tag data. The tag class ID 1 is then mapped to the specific predefined read characteristics pertaining to that given class by reading the field immediately to the right of the class ID 1. In this way, for example, the tag data, RSSI, etc. transmitted by the reader device 202 can then be compared against the predefined read characteristics for tag class 1. And because there was a read (i.e., "tag read TRUE"), then some machine or apparatus state is inferred, such as the conveyor belt is moving.

### III. Example System Operation

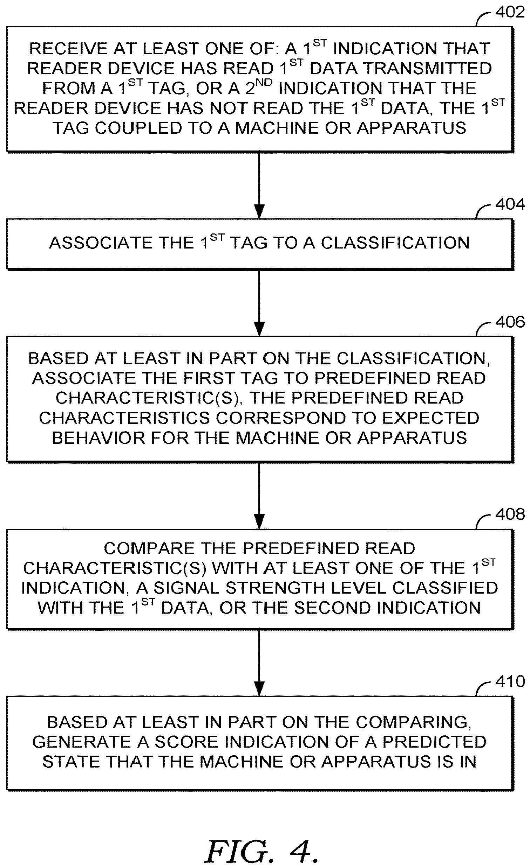

FIG. 4 is a flow diagram of an example process 400 for generating a score indicative of a predicted state that a machine or apparatus is in, according to some embodiments. In some embodiments, an analysis computing entity 05 of FIG. 5, such as a server performs the process 400. In yet other embodiments, the combination of the analysis computing entity 05 and a source computing entity 10 (of FIG. 5) performs the process 400. The process 400 (and/or any of the functionality described herein) may be performed by processing logic that comprises hardware (e.g., circuitry, dedicated logic, programmable logic, microcode, etc.), software (e.g., instructions run on a processor to perform hardware simulation), firmware, or a combination thereof. Although particular blocks described in this disclosure are referenced in a particular order at a particular quantity, it is understood that any block may occur substantially parallel with or before or after any other block. Further, more (or fewer) blocks may exist than illustrated. Added blocks may include blocks that embody any functionality described herein (e.g., as described with respect to FIGS. 1-4). The computer-implemented method, the system (that includes at least one computing device having at least one processor and at least one computer readable storage medium), and/or the computer program product/computer storage media as described herein may perform or be caused to perform the process 400, and/or any other functionality described herein.

Per block 402, some embodiments receive at least one of: a first indication that a reader device has read first data transmitted from a first tag, or a second indication that the reader device has not read the first data, the first tag coupled to a machine or apparatus. For example, the first indication may include receiving data stored to the tag and the ID of the reader device that read the tag. The second indication may include metadata that a first reader device transmitted an interrogation signal with no response back from a tag. In yet another example, referring back to FIG. 1, the request handler 102 looks up a database of records that contains near real-time information about which tag has transmitted information to which reader device at which time stamps and records that contain information about which tags have not transmitted data to particular reader devices (e.g., based on a reader device having transmitted an interrogation signal without receiving returned data from a tag). In another example, some embodiments receive flag or notification values (e.g., Tag 1 transmitted data to reader device 1 = TRUE) as part of the indication in response to calling a function that returns these values. In some embodiments, block 402 includes receiving an indication of a signal strength that the tag transmitted the first data at and/or an indication of a signal strength that the reader device transmitted a signal (e.g., an interrogation signal) at to receive the first data. In some embodiments, the reader device and first tag are located in a logistics enclosure. In some embodiments, the logistics enclosure includes or represents a logistics vehicle. In some embodiments, the logistics enclosure includes or represents a logistics facility (e.g., a sorting hub, a shipping drop-off store, a warehouse, etc.).

Per block 404, some embodiments associate the first tag to a classification. Such "classification" described herein may refer to a classification of the first tag itself (e.g., conveyor belt tag), which indicates what type of machinery or apparatus the tag is coupled to. In some embodiments, such classification refers to the type or category of the machine or apparatus itself, such as a rear door, conveyor belt, etc. In some embodiments, to "associate" the first tag to a classification includes mapping, via a data structure (e.g., a lookup data structure) and/or calling function, a tag ID of the first tag to an ID or class it belongs to. In some embodiments, block 404 represents or includes classifying the first tag to indicate what class, category, or type the first tag belongs to, which can happen at runtime or build time.

Per block 406, based at least in part on the classification, some embodiments associate the first tag (and/or the classification) to one or more predefined read characteristics, where the predefined read characteristics correspond to potential (e.g., expected) operational behavior for the machine or apparatus. A potential behavior is a particular potential state that the machine or apparatus can be in or is capable of, and there may be multiple potential states. For example, a door can be in an open position (a first expected behavior) or a closed position (a second expected behavior). In another example, a conveyor belt assembly can optionally be rotating at various speed or speed ranges and can be in a stopped state. In some embodiments, the one or more predefined read characteristics are associated with the first tag (e.g., the classification). Some embodiments use the table 300 to perform block 406. For example, some embodiments perform a lookup at the table 300 to map the tag data to a tag class ID and then a corresponding read characteristic. For example, based on the tag class ID being 1, some embodiments lookup the corresponding predefined red characteristic-"if tag read = TRUE, then... "

Per block 408, some embodiments compare the predefined read characteristic(s) with at least one of: the first indication, a signal strength level associated with the first data, or the second indication. For example, the Boolean value "Read = TRUE" (indicating that the reader device has read the first data) can be compared against a set of rules that specify what inference to make if the reader device has read the first data. In some embodiments, "comparing" includes the concept of analyzing or running the first indication, an indicator of the signal strength level (e.g., X RSSI), and/or the second indication through one or more sets of corresponding conditional statements or other tests (e.g., tree structure branches and nodes) to determine an output. For example, X RSSI can be run through a conditional statement that says, "IF RSSI = >X, then drone has landed on railing." In some embodiments, block 408 includes or alternatively represents determining whether the first indication, the signal strength level, and/or the second indication meets, exceeds, or is outside of a threshold associated with the predefined read characteristics. For example, it can be determined whether a read is present, absent, or whether the RSSI level exceeds, meets, or is below some threshold as defined in the predefined read characteristics. In some embodiments, "comparing" refers to comparing distances (e.g., a Euclidian or Cosine distance) between vector(s) representing the first indication, the second indication, or signal strength and other vector(s) representing the predefined read characteristics, such as in embodiments that use machine learning.

Per block 410, based at least in part on the comparing, some embodiments generate a score (e.g., a confidence level or distance) indicative of a predicted state (or predicted operational behavior) that the machine or apparatus is in or experiencing. For example, using the illustration above, if a conditional statement reads "IF RSSI = >X, then drone has landed on railing," then a score indicating a high probability that the drone has landed on the railing is generated. In another example, a machine learning prediction classification, clustering, regression score or can be generated. For example, a model can convert or encode the first indication, the signal strength, and/or second indication into a feature vector, and determine, via vector space, a distance (e.g., Euclidian or Cosine) that the nearest vector is in vector space, which may correspond to the particular predicted state. For example, it can be learned over various training iterations that when a read of a tag occurs at a specific time interval, it corresponds to a particular speed of a conveyor belt. Accordingly, later at runtime (post training), if the read of the tag is occurring at (or within a threshold time of) the specific time interval, it can be predicted that the conveyor belt is rotating at the particular speed.

### IV. Apparatuses, Methods, and Systems

Embodiments of the present disclosure may be implemented in various ways, including as apparatuses that comprise articles of manufacture. An apparatus or system may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (e.g., a solid state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double information/data rate synchronous dynamic random access memory (DDR SDRAM), double information/data rate type two synchronous dynamic random access memory (DDR2 SDRAM), double information/data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices/entities, computing entities, and/or the like. As such, embodiments of the present disclosure may take the form of an apparatus, system, computing device, computing entity, and/or the like executing instructions stored on a computer-readable storage medium to perform certain steps or operations. However, embodiments of the present disclosure may also take the form of an entirely hardware embodiment performing certain steps or operations.

Embodiments of the present disclosure are described above with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices/entities, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flowchart illustrations. Accordingly, the block diagrams and flowchart illustrations support various combinations of embodiments for performing the specified instructions, operations, or steps.

### V. Example Computing Environment

FIG. 5 is a schematic diagram of an example computing environment 500 in which aspects of the present disclosure are employed, according to some embodiments. As shown in FIG. 5, the computing environment 500 may include one or more analysis computing entities 05 (e.g., a shipping company mainframe, cloud computing nodes, and/or a logistics store desktop), and/or one or more mobile computing entities 10 (e.g., a mobile device, such as a delivery information acquisition device (DIAD) or mobile phone, a tag printer, a reader, or a tag), some or all of which may be communicatively coupled via one or more networks 110.

In some embodiments, "communicatively coupled" means that two or more components can perform data transportation between each other via a wired (e.g., Ethernet or fiber-optic medium connected in a LAN) or wireless (e.g., IEEE 802.15.4) computer protocol network. Each of these components, entities, devices, systems, and similar words used herein interchangeably may be in direct or indirect communication with one another over, for example, the same or different wired and/or wireless networks. Additionally, while FIG. 5 illustrates the various system entities as separate, standalone entities, the various embodiments are not limited to this particular architecture. In some embodiments, there are more or fewer (or combined) components than illustrated in the environment 500.

In some embodiments, one or more components of the computing environment 500 represent corresponding components as described herein. For example, in some embodiments, the mobile computing entity 10 represents or comprises the tag printer, reader, or tag described herein. In some embodiments, the analysis computing entity 05 represents a "database," "datastore," and/or "server" as described herein.

In some embodiments, some or all of the components of the system 100 of FIG. 1 are located within the analysis computing entity 05. In some embodiments, the components of the system 100 of FIG. 1 are distributed among the components of the environment 100. In some embodiments, the components of system 100 of FIG. 1 are located within one or more of the mobile computing entities 10. For example, in some embodiments, the identification code anonymizer 120 and/or de-anonymizer 130 are located within a tag printer and/or reader.

In various embodiments, the network(s) 110 represents or includes an IoT (internet of things) or IoE (internet of everything) network, which is a network of interconnected items (e.g., any of the mobile computing entities 10 and/or the analysis computing entity 05) that are each provided with unique identifiers (e.g., UIDs) and computing logic so as to communicate or transfer data with each other or other components. Such communication can happen without requiring human-to-human or human-to-computer interaction. For example, an IoT network may include the mobile computing entity 10 that includes an application, which sends a request, via the network(s) 110, to the analysis computing entity 05 to retrieve an identification code, retrieve internal data, or perform an anonymization or de-anonymization operation, for example. Responsively, the tag printer and/or reader may, for example, perform additional operations and/or write an identification code (e.g., an anonymized identification code) to a tag. In the context of an IoT network, a computing device can be or include one or more local processing devices (e.g., edge nodes) that are one or more computing devices configured to store and process, over the network(s) 110, either a subset or all of the received or respective sets of data to the one or more remote computing devices (e.g., the mobile computing entities 10 and/or the analysis computing entity 05) for analysis.

In some embodiments, the local processing device(s) described above is a mesh or other network of microdata centers or edge nodes that process and store local data received from the mobile computing entity 10 (e.g., a user device) and/or the analysis computing entity 05, and push or transmit some or all of the data to a cloud device or a corporate data center that is or is included in the one or more analysis computing entities 05. In some embodiments, the local processing device(s) store all of the data and only transmit selected (e.g., data that meets a threshold) or important data to the analysis computing entity 05. Accordingly, the non-important data or the data that is in a group that does not meet a threshold is not transmitted. In various embodiments where the threshold or condition is not met, daily or other time period reports are periodically generated and transmitted from the local processing device(s) to the remote device(s) indicating all the data readings gathered and processed at the local processing device(s). In some embodiments, the one or more local processing devices act as a buffer or gateway between the network(s) and a broader network, such as the one or more networks 110. Accordingly, in these embodiments, the one or more local processing devices can be associated with one or more gateway devices that translate proprietary communication protocols into other protocols, such as internet protocols.

### VI. Exemplary Analysis Computing Entity

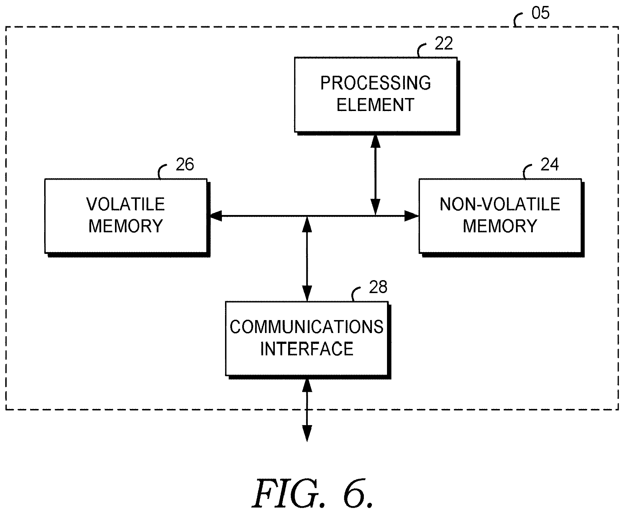

FIG. 6 is a block diagram of the analysis computing entity 05 of FIG. 5, according to particular embodiments of the present disclosure. In general, the terms computing entity, computer, entity, device, system, and/or similar words used herein interchangeably may refer to, for example, one or more computers, computing entities, desktops, mobile phones, tablets, phablets, notebooks, laptops, distributed systems, consoles input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In particular embodiments, these functions, operations, and/or processes can be performed on data, content, information/data, and/or similar terms used herein interchangeably.

In particular embodiments, the analysis computing entity 05 may also include one or more communications interfaces for communicating with various computing entities, such as by communicating data, content, information/data, and/or similar terms used herein interchangeably that can be transmitted, received, operated on, processed, displayed, stored, and/or the like.

As shown in FIG. 6, in particular embodiments, the analysis computing entity 05 may include or be in communication with one or more processing elements 22 (also referred to as processors, processing circuitry, and/or similar terms used herein interchangeably) that communicate with other elements within the analysis computing entity 05 via a bus, for example. As will be understood, the processing element 22 may be embodied in a number of different ways. For example, the processing element 22 may be embodied as one or more complex programmable logic devices (CPLDs), microprocessors, multi-core processors, coprocessing entities, application-specific instruction-set processors (ASIPs), microcontrollers, and/or controllers. Further, the processing element 22 may be embodied as one or more other processing devices or circuitry. The term circuitry may refer to an entirely hardware embodiment or a combination of hardware and computer program products. Thus, the processing element 22 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processing element 22 may be configured for a particular use or configured to execute instructions stored in volatile or non-volatile media or otherwise accessible to the processing element 22. As such, whether configured by hardware or computer program products, or by a combination thereof, the processing element 22 may be capable of performing steps or operations according to embodiments of the present disclosure when configured accordingly.

In particular embodiments, the analysis computing entity 05 may further include or be in communication with non-volatile media (also referred to as non-volatile storage, memory, memory storage, memory circuitry and/or similar terms used herein interchangeably). In particular embodiments, the non-volatile storage or memory may include one or more non-volatile storage or memory media 24, including but not limited to hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. As will be recognized, the non-volatile storage or memory media 24 may store databases (e.g., parcel/item/shipment database), database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or information/data that is stored in a computer-readable storage medium using one or more database models, such as a hierarchical database model, network model, relational model, entity-relationship model, object model, document model, semantic model, graph model, and/or the like.

In particular embodiments, the analysis computing entity 05 may further include or be in communication with volatile media (also referred to as volatile storage, memory, memory storage, memory circuitry and/or similar terms used herein interchangeably). In particular embodiments, the volatile storage or memory may also include one or more volatile storage or memory media 26, including but not limited to RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. As will be recognized, the volatile storage or memory media 26 may be used to store at least portions of the databases, database instances, database management systems, data, applications, programs, program modules, scripts, source code, object code, byte code, compiled code, interpreted code, machine code, executable instructions, and/or the like being executed by, for example, the processing element 22. Thus, the databases, database instances, database management systems, data, applications, programs, program modules, scripts, source code, object code, byte code, compiled code, interpreted code, machine code, executable instructions, and/or the like may be used to control certain aspects of the operation of the analysis computing entity 05 with the assistance of the processing element 22 and operating system.

As indicated, in particular embodiments, the analysis computing entity 05 may also include one or more communications interfaces 28 for communicating with various computing entities, such as by communicating information/data, content, information/data, and/or similar terms used herein interchangeably that can be transmitted, received, operated on, processed, displayed, stored, and/or the like. Such communication may be executed using a wired information/data transmission protocol, such as fiber distributed information/data interface (FDDI), digital subscriber line (DSL), Ethernet, asynchronous transfer mode (ATM), frame relay, information/data over cable service interface specification (DOCSIS), or any other wired transmission protocol. Similarly, the analysis computing entity 05 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra wideband (UWB), infrared (IR) protocols, near field communication (NFC) protocols, Wibree, Bluetooth protocols, wireless universal serial bus (USB) protocols, long range low power (LoRa), LTE Cat M1, NarrowBand IoT (NB IoT), and/or any other wireless protocol.

Although not shown, the analysis computing entity 05 may include or be in communication with one or more input elements, such as a keyboard input, a mouse input, a touch screen/display input, motion input, movement input, audio input, pointing device input, joystick input, keypad input, and/or the like. The analysis computing entity 05 may also include or be in communication with one or more output elements (not shown), such as audio output, video output, screen/display output, motion output, movement output, and/or the like.

As will be appreciated, one or more of the analysis computing entity's 05 components may be located remotely from other analysis computing entity 05 components, such as in a distributed system. Furthermore, one or more of the components may be combined and additional components performing functions described herein may be included in the analysis computing entity 05. Thus, the analysis computing entity 05 can be adapted to accommodate a variety of needs and circumstances. As will be recognized, these architectures and descriptions are provided for exemplary purposes only and are not limiting to the various embodiments.

### VII. Example Mobile Computing Entities

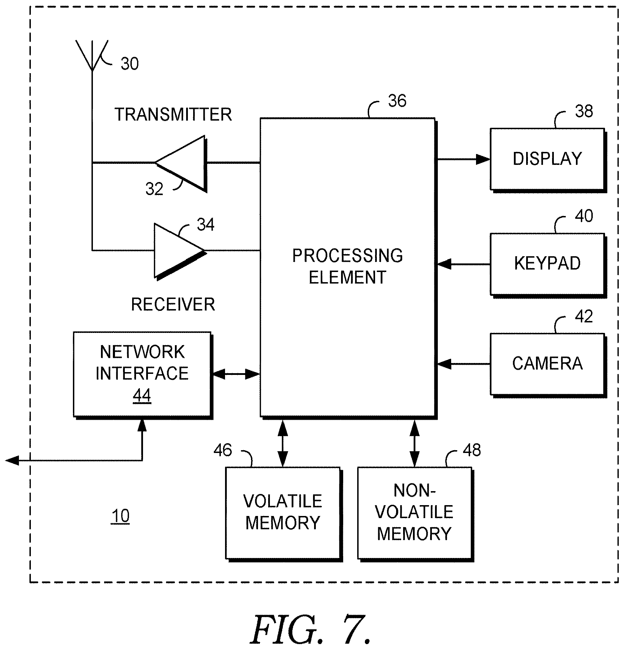

Turning now to FIG. 7, a block diagram of a mobile computing entity 10 of FIG. 5, according to some embodiments. In certain embodiments, mobile computing entity(s) 10 may be embodied as handheld computing entities, such as mobile phones, tablets, personal digital assistants, readers, tags, tag printers, and/or the like, that may be operated at least in part based on user input received from a user via an input mechanism. It should be understood that various embodiments of the present disclosure may comprise a plurality of mobile computing entities 10 embodied in one or more forms (e.g., kiosks, mobile devices, watches, laptops, carrier personnel devices (e.g., delivery iinformation acquisition devices (DIADs)), tag printers, readers, tags, etc.)

As will be recognized, a user may be an individual, a family, a company, an organization, an entity, a department within an organization, a representative of an organization and/or person, and/or the like-whether or not associated with a carrier. In particular embodiments, a user may operate a mobile computing entity 10 that may include one or more components that are functionally similar to those of the analysis computing entity 05. This figure provides an illustrative schematic representative of a mobile computing entity 10 that can be used in conjunction with embodiments of the present disclosure. In general, the terms device, system, mobile computing entity, user device, entity, and/or similar words used herein interchangeably may refer to, for example, one or more computers, computing entities, desktops, mobile phones, tablets, phablets, notebooks, laptops, distributed systems, vehicle multimedia systems, autonomous vehicle onboard control systems, watches, glasses, key fobs, tags, tag printers, readers, ear pieces, scanners, imaging devices/cameras (e.g., part of a multi-view image capture system), wristbands, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Mobile computing entity(s) 10 can be operated by various parties, including carrier personnel (sorters, loaders, delivery drivers, network administrators, and/or the like). As shown this figure, the mobile computing entity(s) 10 can include an antenna 30, a transmitter 32 (e.g., radio), a receiver 44 (e.g., radio), and a processing element 36 (e.g., CPLDs, microprocessors, multi-core processors, coprocessing entities, ASIPs, microcontrollers, and/or controllers) that provides signals to and receives signals from the transmitter 32 and receiver 34, respectively. In some embodiments, the mobile computing entity(s) 10 additionally includes other components not shown, such as a fingerprint reader, a printer, and/or the camera.

The signals provided to and received from the transmitter 32 and the receiver 34, respectively, may include signaling information in accordance with air interface standards of applicable wireless systems. In this regard, the mobile computing entity(s) 10 may be capable of operating with one or more air interface standards, communication protocols, modulation types, and access types. More particularly, the mobile computing entity(s) 10 may operate in accordance with any of a number of wireless communication standards and protocols, such as those described above with regard to the analysis computing entity(s) 05. In a particular embodiment, the mobile computing entity(s) 10 may operate in accordance with multiple wireless communication standards and protocols, such as UMTS, CDMA2000, 1xRTT, WCDMA, TD-SCDMA, LTE, E-UTRAN, EVDO, HSPA, HSDPA, Wi-Fi, Wi-Fi Direct, WiMAX, UWB, IR, NFC, Bluetooth, USB, RF, and/or the like. Similarly, the mobile computing entity(s) 10 may operate in accordance with multiple wired communication standards and protocols, such as those described above with regard to the analysis computing entity(s) 05 via a network interface 44.

Via these communication standards and protocols, the mobile computing entity(s) 10 can communicate with various other entities using concepts such as unstructured supplementary service information/data (USSD), Short Message Service (SMS), Multimedia Messaging Service (MMS), dual-tone multi-frequency signaling (DTMF), and/or subscriber iidentity module dialer (SIM dialer). The mobile computing entity(s) 10 can also download changes, add-ons, and updates, for instance, to its firmware, software (e.g., including executable instructions, applications, program modules), and operating system.

According to particular embodiments, the mobile computing entity(s) 10 may include location determining aspects, devices, modules, functionalities, and/or similar words used herein interchangeably. For example, the mobile computing entity(s) 10 may include outdoor positioning aspects, such as a location module adapted to acquire, for example, latitude, longitude, altitude, geocode, course, direction, heading, speed, universal time (UTC), date, and/or various other information/data. In particular embodiments, the location module can acquire information/data, sometimes known as ephemeris information/data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This information/data can be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information can be determined by triangulating the computing entity's 10 position in connection with a variety of other systems, including cellular towers, Wi-Fi access points, and/or the like. Similarly, the mobile computing entity(s) 10 may include indoor positioning aspects, such as a location module adapted to acquire, for example, latitude, longitude, altitude, geocode, course, direction, heading, speed, time, date, and/or various other information/data. Some of the indoor systems may use various position or location technologies including RFID tags, indoor beacons or transmitters, Wi-Fi access points, cellular towers, nearby computing devices/entities (e.g., smartphones, laptops) and/or the like. For instance, such technologies may include the iBeacons, Gimbal proximity beacons, Bluetooth Low Energy (BLE) transmitters, NFC transmitters, and/or the like. These indoor positioning aspects can be used in a variety of settings to determine the location of someone or something to within inches or centimeters.

The mobile computing entity(s) 10 may also comprise a user interface (that can include a display 38 coupled to a processing element 36) and/or a user input interface (coupled to a processing element 36). For example, the user interface may be a user application, browser, user interface, and/or similar words used herein interchangeably executing on and/or accessible via the mobile computing entity 10 to interact with and/or cause display of information from the analysis computing entity 05, as described herein. The user input interface can comprise any of a number of devices or interfaces allowing the mobile computing entity(s) 10 to receive information/data, such as a keypad 40 (hard or soft), a touch display, voice/speech or motion interfaces, or other input device. In embodiments including a keypad 40, the keypad 40 can include (or cause display of) the conventional numeric (0-9) and related keys (#, *), and other keys used for operating the mobile computing entity(s) 10 and may include a full set of alphabetic keys or set of keys that may be activated to provide a full set of alphanumeric keys. In addition to providing input, the user input interface can be used, for example, to activate or deactivate certain functions, such as screen savers and/or sleep modes.

As shown in this figure, the mobile computing entity(s) 10 may also include an camera 42, imaging device, and/or similar words used herein interchangeably (e.g., still-image camera, video camera, IoT enabled camera, IoT module with a low resolution camera, a wireless enabled MCU, and/or the like) configured to capture images. The mobile computing entity(s) 10 may be configured to capture images via the onboard camera 42, and to store those imaging devices/cameras locally, such as in the volatile memory 46 and/or non-volatile memory 48. As discussed herein, the mobile computing entity(s) 10 may be further configured to match the captured image data with relevant location and/or time information captured via the location determining aspects to provide contextual information/data, such as a time-stamp, date-stamp, location-stamp, and/or the like to the image data reflective of the time, date, and/or location at which the image data was captured via the camera 42. The contextual data may be stored as a portion of the image (such that a visual representation of the image data includes the contextual data) and/or may be stored as metadata associated with the image data that may be accessible to various computing entity(s) 10.

The mobile computing entity(s) 10 may include other input mechanisms, such as scanners (e.g., barcode scanners), microphones, accelerometers, RFID readers, and/or the like configured to capture and store various information types for the mobile computing entity(s) 10. For example, a scanner may be used to capture parcel/item/shipment information/data from an item indicator disposed on a surface of a shipment or other item. In certain embodiments, the mobile computing entity(s) 10 may be configured to associate any captured input information/data, for example, via the onboard processing element 36. For example, scan data captured via a scanner may be associated with image data captured via the camera 42 such that the scan data is provided as contextual data associated with the image data.

The mobile computing entity(s) 10 can also include volatile storage or memory 46 and/or non-volatile storage or memory 48, which can be embedded and/or may be removable. For example, the non-volatile memory may be ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. The volatile memory may be RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. The volatile and non-volatile storage or memory can store databases, database instances, database management systems, information/data, applications, programs, program modules, scripts, source code, object code, byte code, compiled code, interpreted code, machine code, executable instructions, and/or the like to implement the functions of the mobile computing entity(s) 10. As indicated, this may include a user application that is resident on the entity or accessible through a browser or other user interface for communicating with the analysis computing entity 05 and/or various other computing entities.

In another embodiment, the mobile computing entity(s) 10 may include one or more components or functionality that are the same or similar to those of the analysis computing entity 05, as described in greater detail above. As will be recognized, these architectures and descriptions are provided for exemplary purposes only and are not limiting to the various embodiments.

As discussed above, and as depicted in FIG. 5, the mobile computing entity 10 may comprise a reader, a tag, and/or a tag printer, for example.

The reader (or "reader device") s generally responsible for interrogating or reading data emitted from or located on the tag. The reader may also write data to the tag. The reader may be any suitable reader machine, manufacture, or module. For example, the reader can be an RFID reader, a near-field communication (NFC) reader, optical scanner, optical reader, bar code scanner, magnetic ink character recognition reader, beacon reader, or the like. The reader can be coupled to or placed in any suitable location, such as a particular distance, orientation, and/or height from storage unit, on the ceiling of a building, on the floor of the building, one the walls of the building, and/or on any structure within a geographical area. In some embodiments, the reader may be a handheld device.

The tag(s) are typically attached or otherwise coupled to package(s) which need to be loaded into a particular logistics vehicle, are present inside a logistics vehicle, or have been unloaded from a logistics vehicle. The tag(s) are generally responsible for indicating or emitting/transmitting data (e.g., to a reader), such as an identifier that identifies the respective tag and/or properties thereof. A tag may be or include any suitable tag, machine, manufacture, module, and/or computer-readable indicia. "Computer-readable indicia" as described herein is any tag (e.g., RFID or NFC tag) information, bar code, data matrix, numbers, lines, shapes, and/or other suitable identifier that is machine-readable (and tends not to be readable by a human) because machines can process the data.

In some embodiments, a "tag" as described herein is any physical object that stores, at minimum, an identifier that identifies the tag. The identifier (and potentially other data) is configured to be read by a reader device. For example, in some embodiments, a RFID tag includes an antenna or radio (for transmitting and receiving its tag ID) and an RFID chip (e.g., an integrated circuit), which stores the tag's ID and other information. In another example, a tag is or includes a paper label with a matrix or barcode with an encoded ID.

A tag may comprise one or more memory banks. For example, a tag, such as an RFID tag, may comprise reserved memory, tag identifier (TID) memory, electronic product code (EPC) memory, and/or user memory. TID memory may store the identifier that identifies the tag. EPC memory may be user-readable and user-writable. EPC memory may be 96 bits in size.

In some embodiments, any tag-reader combination described herein may be part of an RFID system. Accordingly, these components may include the components and functionality of RFID tags and readers, for example. RFID is a way to store and retrieve data through electromagnetic transmission to an RF compatible integrated circuit. An RFID reader device can read data emitted from or located within RFID tags. RFID readers and tags use a defined radio frequency and protocol to transmit or provide (via tags) and receive (via readers) data. RFID tags are categorized as at least passive or active. Passive RFID tags operate without a battery. They reflect the RF signal transmitted to them from a reader device and add information by modulating the reflected signal. Their read ranges are limited relative to active tags. Active tags contain both a radio transceiver and a battery to power the transceiver. Since there is an onboard radio on the tag, active tags have more range than passive tags. It is noted, however, that the reader devices or tags need not be a part of RFID protocols, but can alternatively or additionally include other protocols, such as Bluetooth low energy (BLE), bar codes, QR codes, and the like.

The tag printer may comprise a device capable of printing and/or encoding tags (e.g., RFID tags), for example. In some embodiments, the tag printers is an RFID printer. The tag printer may be configured to receive instructions and/or data-e.g., over the network(s) 110-and print and/or encode a tag with data (which may comprise or be based on the received instructions and/or data). For example, in accordance with aspects described herein, the tag printer may receive an instruction to print a tag comprising an identification code, write the identification code to memory associated with the tag (e.g., EPC memory associated with an RFID tag), and print the tag.

### VIII. Definitions

"And/or" is the inclusive disjunction, also known as the logical disjunction and commonly known as the "inclusive or." For example, the phrase "A, B, and/or C," means that at least one of A or B or C is true; and "A, B, and/or C" is only false if each of A and B and C is false.

A "set of' items means there exists one or more items; there must exist at least one item, but there can also be two, three, or more items. A "subset of" items means there exists one or more items within a grouping of items that contain a common characteristic.

A "plurality of" items means there exists more than one item; there must exist at least two items, but there can also be three, four, or more items.

"Includes" and any variants (e.g., including, include, etc.) means, unless explicitly noted otherwise, "includes, but is not necessarily limited to."

A "user" or a "subscriber" includes, but is not necessarily limited to: (i) a single individual human; (ii) an artificial intelligence entity with sufficient intelligence to act in the place of a single individual human or more than one human; (iii) a business entity for which actions are being taken by a single individual human or more than one human; and/or (iv) a combination of any one or more related "users" or "subscribers" acting as a single "user" or "subscriber."

The terms "receive," "provide," "send," "input," "output," and "report" should not be taken to indicate or imply, unless otherwise explicitly specified: (i) any particular degree of directness with respect to the relationship between an object and a subject; and/or (ii) a presence or absence of a set of intermediate components, intermediate actions, and/or things interposed between an object and a subject.

The terms first (e.g., first tag), second (e.g., second tag), etc. are not to be construed as denoting or implying order or time sequences unless expressly indicated otherwise. Rather, they are to be construed as distinguishing two or more elements. In some embodiments, the two or more elements, although distinguishable, have the same makeup. For example, a first memory and a second memory may indeed be two separate memories but they both may be RAM devices that have the same storage capacity.

The term "causing" or "cause" means that one or more systems (e.g., computing devices) and/or components (e.g., processors) may in in isolation or in combination with other systems and/or components bring about or help bring about a particular result or effect. For example, a server may "cause" a message to be displayed by a computing entity and/or the same computing entity may "cause" the same message to be displayed (e.g., via a processor that executes instructions and data in a display memory of the user device). Accordingly, one or both systems may in isolation or together "cause" the effect of displaying a message.

The following embodiments represent exemplary aspects of concepts contemplated herein. Any one of the following embodiments may be combined in a multiple dependent manner to depend from one or more other clauses. Further, any combination of dependent embodiments (e.g., clauses that explicitly depend from a previous clause) may be combined while staying within the scope of aspects contemplated herein. The following clauses are exemplary in nature and are not limiting.

According to an embodiment a system is provided which comprises at least one computer processor; and one or more computer storage media storing computer-useable instructions that, when used by the at least one computer processor, cause the at least one computer processor to perform operations comprising: receiving at least one of: a presence indication that a reader device has read first data transmitted from a first tag, or an absence indication that the reader device has not read the first data, the first tag being coupled to a machine or apparatus; classifying the first tag; based at least in part on the classification of the first tag, associating the first tag to one or more predefined read characteristics associated with the first tag, the one or more predefined read characteristics associated with the first tag corresponding to expected behavior for the machine or apparatus; comparing the one or more predefined read characteristics with at least one of: the presence indication, a signal strength level associated with the first data, or the absence indication; and based at least in part on the comparing, generating a score indicative of a predicted state that the machine or apparatus is in.

The operations may further comprise: in response to the generating of the score, transmitting a signal that causes the machine or apparatus to change its state.

The score indicative of a predicted state that the machine or apparatus is in may be based on the first reader device having read the first data.

The score indicative of a predicted state that the machine or apparatus is in may be based on the receiving of the absence indication that the first reader device has not read the first data.

The score indicative of a predicted state that the machine or apparatus is in may be based on the first reader device having read the first data at a first time and then receiving, at a second time subsequent to the first time, the absence indication that the first reader device has not read the first data.

The score indicative of a predicted state that the machine or apparatus is in may be based on a comparison of the signal strength value associated with the first data and a signal strength value indicated in the one or more predefined read characteristics.

The reader device and first tag may be located in a logistics enclosure, wherein the logistics enclosure includes at least one of: a logistics vehicle or a logistics facility.

The operations may further comprise: receiving at least one of: a third indication that the reader device or a second reader device has read second data transmitted from a second tag, or a fourth indication that the reader device or the second reader device has not read the second data, the second tag being coupled to the machine or apparatus; classifying the second tag; based at least in part on the classification of the second tag, associating the second tag to the one or more predefined read characteristics; comparing the one or more predefined read characteristics with at least one of: the second data, the third indication, or the fourth indication, wherein the score that is indicative of the predicted stated that the machine or apparatus is in is further based at least in part on the comparing of the one or more predefined read characteristics with at least one of: the second data, the third indication, or the fourth indication.

The operations may further comprise: receiving a third indication that the reader device or a second reader device has read second data transmitted from a second tag, the second tag being coupled to a parcel; receiving a fourth indication that the reader device or the second reader device has read third data transmitted from a third tag, the third tag being coupled to a logistics enclosure; based at least in part on the reader device or the second reader device reading: the first data from the first tag coupled to the machine or apparatus, reading the second data, and the reading of the third data, generating a second score indicative of a prediction of at least one of: a location of the parcel, whether the parcel is in motion, and a travel trajectory of the parcel.

The one or more predefined read characteristics may include a presence and absence of reads of the first data of the first tag, and wherein the machine or apparatus is a door, and wherein the expected behavior is the door being open or closed, and wherein the score indicates a prediction of whether the door is open or closed.

The one or more predefined read characteristics may include a presence and absence of reads of the first data of the first tag per time period, and wherein the machine or apparatus is a conveyor belt assembly, and wherein the expected behavior is a conveyor belt, of the conveyor belt assembly, rotating at a particular speed, and wherein the score indicates a prediction of whether the conveyor belt is rotating at the particular speed.

According to an embodiment a computer-implemented is provided comprising: receiving one of: a first indication that a reader device has read first data transmitted from a first tag, or a second indication that the reader device has not read the first data, the first tag being coupled to a machine or apparatus; at least partially responsive to the receiving, associating the first tag to a classification of the tag; based at least in part on the associating of the first tag to the classification, associating the first tag or the classification to one or more predefined read characteristics, the one or more predefined read characteristics corresponding to potential operational behavior of the machine or apparatus; and based at least in part on the associating of the first tag or classification to the one or more predefined read characteristics and at least one of: the first indication, a signal strength associated with the first data, and the second indication, generating a score indicative of a predicted state that the machine or apparatus is in.

Automatic identification of the location, speed, or general status of equipment and packages around a facility or throughout the network without having to physically be present or manually intervene has long been a target. Traditionally, this can be done using many kinds of sensors and combining their data through some backend processing. This has proven to be very expensive and even cost prohibitive to implement and utilize in some cases. RFID tags are much less expensive than camera sensors, laser/photo eye sensors, etc. The information provided by the tag presence, absence. or combined sequence of both by a RFID reader can enable logic necessary for duplicating existing methods for a fraction of the cost.

In comparison to hardware necessary to provide similar or same information, the cost of one RFID tag is around $.05-1.50 per tag depending on the intended use (off vs on metal). Sensors necessary to glean the same or similar information can range from $50-1000 each. This alternative non-RFID hardware also require significantly more complex installation, further increasing costs. In combination with the hardware being significantly more expensive to acquire and install, the manual processes necessary to obtain information currently requires man hours, benefits, and equipment that goes through significantly more wear and tear through personnel usage.

Current methods for utilizing the presence of a RFID tag fall into three main categories. The first being the presence of a tag read by a reader, which implies that a tag is within range of the reader and able to be read by said reader. Second is the absence of a tag, which implies that a tag is out of range or obstructed from view of a reader, or not present at all on site. Lastly, combining the data from multiple readers to achieve directionality. In traditional methods, the actual encoded information is key to the paring of a tag to a unit for the purposes of inventorying, locating, or otherwise.

The description here is a set of mechanisms and methods for utilizing RFID technology in place of traditional sensors. Automating the identification of location, speed, or general status of equipment and packages both inside and out of facilities has long been pursued. The business decisions made possible by correlation analysis on information provided remotely through RFID tags and readers facilitates enormous savings. Compared to traditional methodology where the three main classifications of data transmission: presence, absence, and defined patterns of both, for specific encoded information are utilized for obtaining and calculating at an itemized level. A novel use case can be created by translating the traditional data through either digital or analog lenses. Then taking this translated data and combining with known manipulations of readable states such as: controlled shuttering of presence and/or absence, known defined motion, or by equipment reference tags being brought together. Another difference compared to traditional processes is that the data encoded on the EPC is specifically not considered important, however what is programmed can be used to categorize tags into classes or subsets of the total population. The combining of these two manipulations and the classifications enables RFID tags to be essentially transformed into alternative traditional sensor technology.

This transformation can be done through two primary kinds of translations on the reads provided from the RFID tags around the facilities, on parcels, or on equipment. The two types of translations would be similar in definition to digital and analog signaling, with digital being flat, or on/off switching, and analog being a curved or continuous graph. The data translations remain no different from traditional data streams without the underlying assumption of known manipulations on readability. The tag readability may be manipulated via gravity, mechanical or otherwise, and then combined with the classification of tag "type" to remove the traditional need of specific EPC data and instead rely solely on the uniqueness of the tag as part of the system. This is not to imply that the data on the tag becomes irrelevant as a portion of the EPC may be needed to categorize tags in some situations, but that the specific data being linked to a unit for inventorying purposes becomes extraneous. The classification of tag can then be paired with expected behavior, or alternatively a predefined data pattern or patterns, to infer situational status of the given tag. The simplest form being that of mechanical manipulation show by embodiments of increasing complexity listed below:

Door tag - Presence vs. Absence - Installing a tag onto the inside face of a bulkhead or rear barn door. The on-metal tag would be either hidden by the body of the cargo area (bulkhead door) or be swung away, out of the readable rage (barn door). Therefore, while the door is open the tag will remain mostly, if not completely, absent and when closed the tag signal will be repeatedly read as present.

Door tag box - Absence vs. Presence - a metal box specifically designed to work with gravity to open and close for vertically sliding rear doors. While open the tag will be read as present, and when closed the tag signal will remain mostly, if not completely, absent.

The above is a use case where the digital interpretation of the presence or absence can be used through mechanical manipulation to replace magnets, photo eyes, and other types of electronic door sensor technology. The preference for RFID over magnets, photo eyes or other sensors would be to utilize existing infrastructure targeting RFID. The methodology of which setup to utilize: Presence vs. Absence (PVA) or Absence vs Presence (AVP) would be determined by the environment where the tag was to be installed. In the case of the bulkhead door being a pocket style door, the tag would naturally be hidden by the framing of the car. The rear door tag would require a containment box to manipulate the readable state of the tag.

Utilizing mechanical manipulation, we can create two different embodiments of the same scenario, one utilizing a digital signal and the other utilizing analog. The First embodiment utilizes the simpler of the two, digital, on/off signaling. The periodic nature of the presence produced in both scenarios can be utilized to determine belt speed by analyzing the period against time: perforations, the belt would create a shuttering effect. The timing of the shuttering and read rates could then be utilized to calculate a belt speed.

Motor shaft tag - Analog - Like watching a horse go around a carousel, the analog signal of RSSI values or signal strength, can be interpreted as distance from the antenna. This curved path can then be compared to the timing of the reads to calculate belt speed by monitoring the revolutions of the motor shaft.

Depending on the nature of the situation, be it the surrounding environment, or outside influences on signal strength such as reflective or reductive materials being introduced in close proximity. The two methods could be used interchangeably or collectively to complete the analysis. A collective example would have the latter analog scenario being utilized most of the time where a tag remains predominantly visible, but can disappear due to reductions in signal or reflections away from the reader reducing signal and effectively turning the tag's data into a digital presence.

Finally, we come to the case where a combination of all of these factors can be used in place of multiple sensors. Using analog measures of RSSI, phase angle, and other metrics that can be provided by RFID readers combined with digital presence and absence values, and tag classifications we can create stories around the tags being read. Knowing the story about the tag trajectory or the unexpected lack of trajectory in cases enables advanced business decisions to be made.

Tag density analysis - damage prevention and dispatch of personnel - through the identification of an increasing density of tags that are known to be in motion at a given location combined with the absence of tag reads at a later location downstream, a building can automatically shut down a belt or series of belts to prevent unnecessary damage to the parcels/units in motion. Personnel can then be notified automatically to the area in question to investigate the potential jam or other issues highlighted by the data density. Traditionally, camera systems of different types would be needed to do this kind of logic.

Car to Car transfers (loss prevention, theft. and customer satisfaction). By utilizing both the digital presence and analog RSSI and phase angle values, packages can be tracked in transfer between equipment. Previously this would require a DIA D scan by both drivers but can now be automated across the two cars. Occasionally parcels are not scanned when transferred between two cars, so this additional information can improve load quality and automation in routing dispatch. This would be applied when cars are backed up to each other for larger package transfers. The on-board RFID systems would read the reference tag from the opposite car and assume the predefined behavior of a car link. Packages then would be over read in both cars across into the opposite car, but packages that had drastically changing phase angles, RSSI, etc. could be determined to be in motion. Should a package be placed tag down against metal and disappear. Tt could still be determined to have been transferred even after cars depart and no longer link together, without reading said specific transferred tags.

Sentinel Box - damage prevention, loss prevention, and dispatch- A mobile RFID reader inside a sturdy box to be utilized in manual and automated facilities. This box will be placed on the belt and scan along its traveled path isolating tags which are both in motion and more importantly those that are not. Reference tags and implied box motion by reference tag presence/absence and the fact that the box is places on a conveyor belt at to be utilized for location and positioning. RSSI values are tracked to identify when tags are passed. This can be utilized to identify tags not in motion. These tags can be reference tags, parcels, and customer tags separated from clustered packaging. By identifying packages not in motion, personnel can be dispatched to a specific area to search and find parcels or contents that have fallen off the belt or gotten stuck on the belt. This reduces both service failures and loss from damages.

Automated delivery scans - theft prevention - In addition to tracking transfers between areas within the company, destination scans can be automated. By utilizing a combination of digital presence/absence scans inside and outside of the vehicle, combined with analog RSSI, phase angle, etc. data, a parcel's motion can be tracked inside and outside of the car. A package that is identified as leaving the car can be connected to existing location data provided by the on-board telematics system and confirm the target destination as a delivery point. Removal of the package at an incorrect location (utilizing and combining with Telematics locationing data) or movement of the package (assumed through analog translations) combined with door status detection technology (mentioned above, or more traditional sensors) can highlight areas of concern for theft prevention.

## Claims

1. A method comprising:
receiving, by computing hardware (600), a request for a predicted state of an apparatus, wherein the request includes an apparatus identifier for the apparatus and a state identifier for the predicted state;
identifying, by the computing hardware (600) and based at least in part on the apparatus identifier and the state identifier, a reader device identifier and a tag identifier associated with the apparatus;
querying, by the computing hardware (600) and based at least in part on the reader device identifier and the tag identifier, tag read data, wherein the tag read data involves a reader device (180) associated with the reader device identifier at least one of reading or not reading a tag (185) associated with the tag identifier during a certain period of time;
identifying, by the computing hardware (600) and based at least in part on the state identifier, a set of rules, wherein the set of rules defines one or more predefined read characteristics associated with the reader device (180) at least one of reading or not reading the tag (185) that correspond to expected behavior for the apparatus;
generating, by the computing hardware (600) processing the tag read data using the set of rules, the predicted state of the apparatus; and
communicating, by the computing hardware (600), the predicted state to at least one of a user computing device (195) or a production computing system (190).

2. The method of claim 1, wherein the one or more predefined read characteristics involve at least one of a presence or an absence of the tag (185) during the certain period of time.

3. The method of claim 1 or 2, wherein the one or more predefined read characteristics involve a metric associated with reading the tag (185) during the certain period of time satisfying a threshold.

4. The method of any of claims 1 to 3, wherein the production computing system (190), responsive to receiving the predicted state, performs an operation involving the apparatus that causes a change of state of the apparatus.

5. The method of any of claims 1 to 4, further comprising:
identifying, by the computing hardware (600) and based at least in part on the apparatus identifier and the state identifier, a second tag identifier associated with the apparatus; and
querying, by the computing hardware (600) and based at least in part on the reader device identifier and the second tag identifier, second tag read data, wherein:
the second tag read data involves the reader device (180) at least one of reading or not reading a second tag (185) associated with the second tag identifier during the certain period of time,
the one or more predefined read characteristics are also associated with the reader device (180) at least one of reading or not reading the second tag (185) that correspond to the expected behavior for the apparatus, and
generating the predicted state of the apparatus also involves the computing hardware (600) processing the second tag read data using the set of rules.

6. The method of any of claims 1 to 4, further comprising:
identifying, by the computing hardware (600) and based at least in part on the apparatus identifier and the state identifier, a second reader device identifier associated with the apparatus; and
querying, by the computing hardware (600) and based at least in part on the second reader device identifier and the tag identifier, second tag read data, wherein:
the second tag read data involves a second reader device (180) associated with the second reader device identifier at least one of reading or not reading the tag (185) during the certain period of time,
the one or more predefined read characteristics are also associated with the second reader device (180) at least one of reading or not reading the tag (185) that correspond to the expected behavior for the apparatus, and
generating the predicted state of the apparatus also involves the computing hardware (600) processing the second tag read data using the set of rules.

7. The method of any of claims 1 to 4, further comprising:
identifying, by the computing hardware (600) and based at least in part on the apparatus identifier and the state identifier, a second reader device identifier and a second tag identifier associated with the apparatus; and
querying, by the computing hardware (600) and based at least in part on the second reader device identifier and the second tag identifier, second tag read data, wherein:
the second tag read data involves a second reader device (180) associated with the second reader device identifier at least one of reading or not reading a second tag (185) associated with the second tag identifier during the certain period of time,
the one or more predefined read characteristics are also associated with the second reader device (180) at least one of reading or not reading the second tag (185) that correspond to the expected behavior for the apparatus, and
generating the predicted state of the apparatus also involves the computing hardware (600) processing the second tag read data using the set of rules.

8. A system comprising:
a non-transitory computer-readable medium storing instructions; and
a processing device communicatively coupled to the non-transitory computer-readable medium, wherein the processing device is configured to execute the instructions and thereby perform operations comprising:
receiving a request for a predicted state of an apparatus, wherein the request includes an apparatus identifier for the apparatus;
identifying, based at least in part on the apparatus identifier, a reader device identifier and a tag identifier associated with the apparatus;
querying, based at least in part on the reader device identifier and the tag identifier, tag read data, wherein the tag read data involves a reader device (180) associated with the reader device identifier at least one of reading or not reading a tag (185) associated with the tag identifier during a certain period of time;
identifying a set of rules, wherein the set of rules defines one or more predefined read characteristics associated with the reader device (180) at least one of reading or not reading the tag (185) that correspond to expected behavior for the apparatus;
processing the tag read data using the set of rules to generate the predicted state of the apparatus; and
communicating the predicted state to at least one of a user computing device (195) or a production computing system (190).

9. The system of claim 8, wherein the one or more predefined read characteristics involve at least one of a presence of the tag (185) during the certain period of time, an absence of the tag (185) during the certain period of time, or a metric associated with reading the tag (185) during the certain period of time satisfying a threshold.

10. The system of claim 8 or 9, wherein the operations further comprise:
identifying, based at least in part on the apparatus identifier, a second tag identifier associated with the apparatus; and
querying, based at least in part on the reader device identifier and the second tag identifier, second tag read data, wherein:
the second tag read data involves the reader device (180) at least one of reading or not reading a second tag (185) associated with the second tag identifier during the certain period of time,
the one or more predefined read characteristics are also associated with the reader device (180) at least one of reading or not reading the second tag (185) that correspond to the expected behavior for the apparatus, and
generating the predicted state of the apparatus also involves processing the second tag read data using the set of rules.

11. The system of any of claims 8 to 10, wherein the operations further comprise:
identifying, based at least in part on the apparatus identifier, a second reader device identifier associated with the apparatus; and
querying, based at least in part on the second reader device identifier and the tag identifier, second tag read data, wherein:
the second tag read data involves a second reader device (180) associated with the second reader device identifier at least one of reading or not reading the tag (185) during the certain period of time,
the one or more predefined read characteristics are also associated with the second reader device (180) at least one of reading or not reading the tag (185) that correspond to the expected behavior for the apparatus, and
generating the predicted state of the apparatus also involves processing the second tag read data using the set of rules.

12. The system of any of claims 8 to 10, wherein the operations further comprise:
identifying, based at least in part on the apparatus identifier, a second reader device identifier and a second tag identifier associated with the apparatus; and
querying, based at least in part on the second reader device identifier and the second tag identifier, second tag read data, wherein:
the second tag read data involves a second reader device (180) associated with the second reader device identifier at least one of reading or not reading a second tag (185) associated with the second tag identifier during the certain period of time,
the one or more predefined read characteristics are also associated with the second reader device (180) at least one of reading or not reading the second tag (185) that correspond to the expected behavior for the apparatus, and
generating the predicted state of the apparatus also involves processing the second tag read data using the set of rules.

13. A non-transitory computer-readable medium storing computer-executable instructions that, when executed by computing hardware (600), configure the computing hardware (600) to perform operations comprising:
receiving a request for a predicted state of an apparatus, wherein the request includes an apparatus identifier for the apparatus;
identifying, based at least in part on the apparatus identifier, a tag identifier associated with the apparatus;
querying, based at least in part on the tag identifier, tag read data, wherein the tag read data involves a reader device (180) at least one of reading or not reading a tag (185) associated with the tag identifier during a certain period of time;
processing the tag read data using a set of rules to generate the predicted state of the apparatus, wherein the set of rules defines one or more predefined read characteristics associated with the reader device (180) at least one of reading or not reading the tag (185) that correspond to expected behavior for the apparatus; and
communicating the predicted state to at least one of a user computing device (195) or a production computing system (190).

14. The non-transitory computer-readable medium of claim 13, wherein the operations further comprise:
identifying, based at least in part on the apparatus identifier, a second tag identifier associated with the apparatus; and
querying, based at least in part on the second tag identifier, second tag read data, wherein:
the second tag read data involves the reader device (180) at least one of reading or not reading a second tag (185) associated with the second tag identifier during the certain period of time,
the one or more predefined read characteristics are also associated with the reader device (180) at least one of reading or not reading the second tag (185) that correspond to the expected behavior for the apparatus, and
generating the predicted state of the apparatus also involves processing the second tag read data using the set of rules.

15. The non-transitory computer-readable medium of claim 13, wherein the operations further comprise querying, based at least in part on the tag identifier, second tag read data, wherein:
the second tag read data involves a second reader device (180) at least one of reading or not reading the tag (185) during the certain period of time,
the one or more predefined read characteristics are also associated with the second reader device (180) at least one of reading or not reading the tag (185) that correspond to the expected behavior for the apparatus, and
generating the predicted state of the apparatus also involves processing the second tag read data using the set of rules.
